# EUROPEAN PATENT APPLICATION

(11) **EP 4 382 259 A1**
(43) Date of publication of application: **12.06.2024**
(21) Application number: 22853117.4
(22) Date of filing: 03.08.2022
(51) Int. Cl.: B25J 9/10

(54) **ROBOT CONTROL DEVICE, ROBOT CONTROL SYSTEM, AND ROBOT CONTROL METHOD**

(30) Priority: 03.08.2021 JP 2021127725
(71) Applicant: Kyocera Corporation, Kyoto-shi Kyoto 612-8501 (JP)
(72) Inventor: UCHITAKE, Masahiro, Kyoto-shi, Kyoto 612-8501 (JP); GRACIA, Fidelia, Kyoto-shi, Kyoto 612-8501 (JP); MORI, Masato, Kyoto-shi, Kyoto 612-8501 (JP); ISHIDA, Takayuki, Kyoto-shi, Kyoto 612-8501 (JP); MIYAMURA, Hiroaki, Kyoto-shi, Kyoto 612-8501 (JP)
(74) Representative: TBK
(86) International application number: PCT/JP2022/029853
(87) International publication number: WO 2023/013699

(57) **Abstract**

A robot control device includes a controller configured to control a robot including a sensor and an end effector. The controller is configured to acquire position information of the end effector with respect to a measurement target disposed inside an operational space of the robot, and correct a coordinate system relating to operation of the robot based on the position information.

## Description

### CROSS-REFERENCE TO RELATED APPLICATIONS

This application claims priority of Japanese Patent Application No. 2021-127725 (filed August 3, 2021), the entire disclosure of which is hereby incorporated by reference.

### TECHNICAL FIELD

The present disclosure relates to a robot control device, a robot control system, and a robot control method.

### BACKGROUND OF INVENTION

Heretofore, a known robot control device creates teaching data based on image recognition processing of a position alignment mark of a work target (see, for example, Patent Literature 1).

### CITATION LIST

### PATENT LITERATURE

Patent Literature 1: Japanese Unexamined Patent Application Publication No. 5-301183

### SUMMARY

In an embodiment of the present disclosure, a robot control device includes a controller. The controller is configured to control a robot. The robot includes a sensor and an end effector. The controller is configured to acquire position information of the end effector with respect to a measurement target disposed inside an operational space of the robot, and correct a coordinate system related to operation of the robot based on the position information.

In an embodiment of the present disclosure, a robot control system includes the robot control device and the robot.

In an embodiment of the present disclosure, a robot control method is a method for controlling a robot including a sensor and an end effector. The robot control method includes acquiring position information of the end effector with respect to a measurement target disposed inside an operational space of the robot, and correcting a coordinate system related to operation of the robot based on the position information.

### BRIEF DESCRIPTION OF THE DRAWINGS

FIG. 1 is a block diagram illustrating an example configuration of a robot control system according to an embodiment.
FIG. 2 is a schematic diagram illustrating an example configuration of the robot control system according to the embodiment.
FIG. 3 is a schematic diagram illustrating an example configuration of an end effector.
FIG. 4 is a flowchart illustrating an example procedure of a robot control method according to an embodiment.
FIG. 5A is a schematic diagram illustrating an example operation in which a measurement target is contacted by the outside of a first finger, with the first finger and a second finger in an open state.
FIG. 5B is a schematic diagram illustrating an example operation in which the measurement target is contacted by a side surface of the first finger, with the first finger and the second finger in an open state.
FIG. 5C is a schematic diagram illustrating an example operation in which the measurement target is contacted by a tip of the first finger, with the first finger and the second finger in an open state.
FIG. 6A is a schematic diagram illustrating an example operation in which the measurement target is contacted by the outside of the first finger, with the first finger and the second finger in a closed state.
FIG. 6B is a schematic diagram illustrating an example operation in which the measurement target is contacted by a side surface of the first finger or the second finger, with the first finger and the second finger in a closed state.
FIG. 6C is a schematic diagram illustrating an example operation in which the measurement target is contacted by the tip of the first finger or the second finger, with the first finger and the second finger in a closed state.
FIG. 7A is a schematic diagram illustrating an example operation in which the first finger or the second finger is moved in an X_RB axis direction along a top surface of the measurement target with the first finger or the second finger in contact with the top surface of the measurement target.
FIG. 7B is a schematic diagram illustrating an example operation in which the first finger or the second finger is moved in a Y_RB axis direction along the top surface of the measurement target with the first finger or the second finger in contact with the top surface of the measurement target.
FIG. 7C is a schematic diagram illustrating an example operation in which the first finger or the second finger is simultaneously moved in the X_RB axis direction and the Y_RB axis direction along the top surface of the measurement target with the first finger or the second finger in contact with the top surface of the measurement target.
FIG. 8 is a schematic diagram illustrating an example operation of rotating around the measurement target with the measurement target pinched between the first finger and the second finger.
FIG. 9A is a schematic diagram illustrating an example configuration of a measurement target including a mark.
FIG. 9B is a schematic diagram illustrating an example configuration of a measurement target including a mark and a contact area.
FIG. 9C is a schematic diagram illustrating an example configuration of a measurement target that does not include a mark.
FIG. 9D is a schematic diagram illustrating an example configuration of a cylindrical measurement target.
FIG. 10 is a schematic diagram illustrating an example in which measurement targets are disposed at diagonal positions on a top surface of a workbench.

### DESCRIPTION OF EMBODIMENTS

Calibration of robots is required to be performed with higher accuracy than is possible with calibration based on image recognition. In an embodiment of the present disclosure, a robot control device, a robot control system, and a robot control method can improve the calibration accuracy of a robot.

### (Overview of Robot Control System 1)

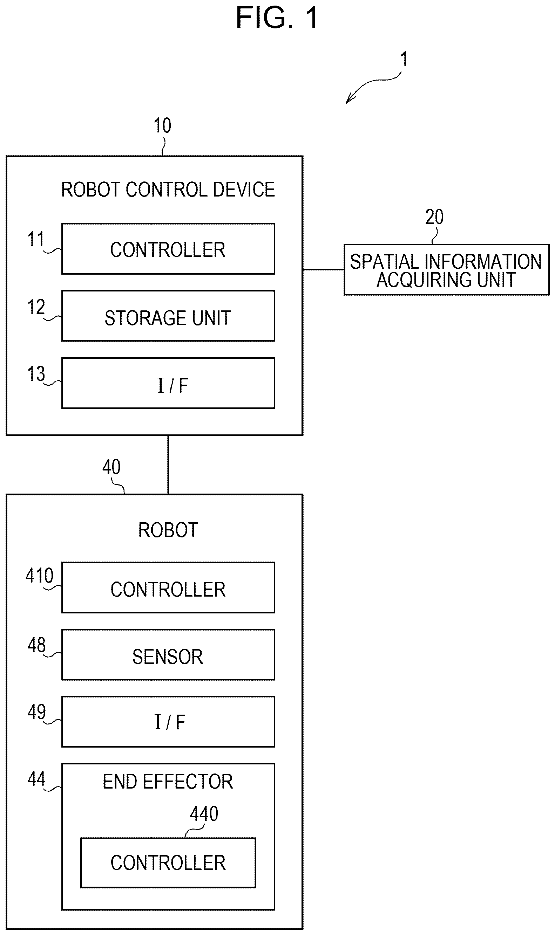

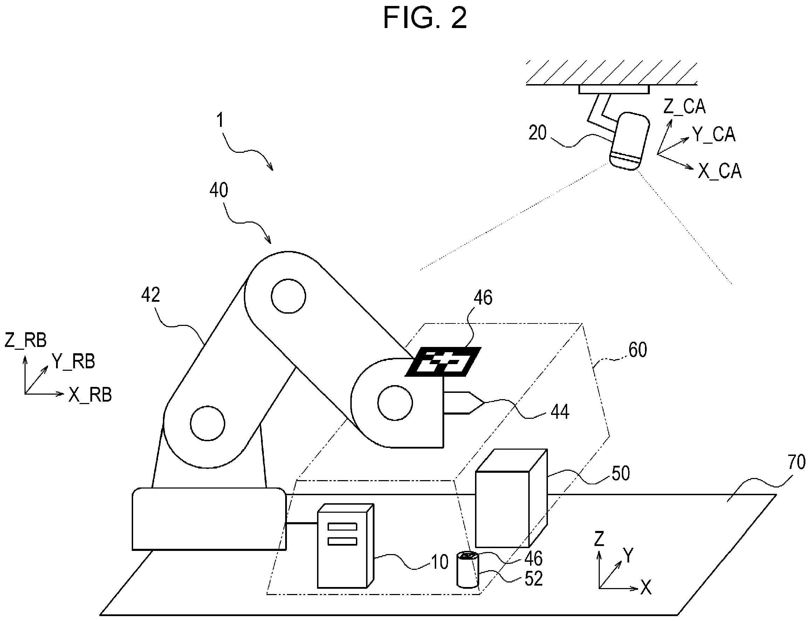

As illustrated in FIG. 1 and FIG. 2, a robot control system 1 according to an embodiment includes a robot 40, a robot control device 10, and a spatial information acquiring unit 20. The robot 40 operates in a prescribed operational space. The spatial information acquiring unit 20 captures images of the operational space in which the robot 40 operates and generates depth information of the operational space. The spatial information acquiring unit 20 calculates the distance to a measurement point located on a surface of an object 50 present in the operational space, as described below. The distance to the measurement point from the spatial information acquiring unit 20 is also referred to as "depth". Depth information is information about the measured depth for each measurement point. In other words, the depth information is information about the distances to the measurement points located on the surfaces of the object 50 present in the operational space. The depth information may be represented as a depth map in which a viewing direction from the spatial information acquiring unit 20 and the depth in that direction are associated with each other. The spatial information acquiring unit 20 generates depth information of the operational space based on an (X_CA, Y_CA, Z_CA) coordinate system. The spatial information acquiring unit 20 may generate an image capturing the operational space. The image capturing the operational space is also referred to as an operational space image.

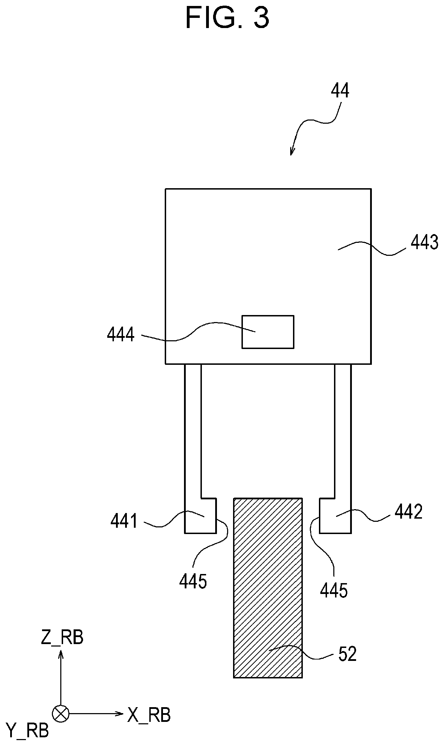

As described below, the robot control device 10 may perform calibration based on the image of the operational space captured by the spatial information acquiring unit 20. The robot control device 10 may correct a coordinate system related to operation of the robot by detecting position information of the robot 40 with respect to a measurement target 52 (see FIG. 3, etc.) disposed in the operational space. The coordinate system related to operation of the robot is, for example, a coordinate system of the operational space, a coordinate system of the robot 40 or a coordinate system of the spatial information acquiring unit 20. The robot control device 10 may detect position information of the robot 40 with respect to the measurement target 52 by detecting various physical quantities such as load or pressure. For example, when the robot control device 10 detects load or pressure, etc., the position of the robot 40 with respect to the measurement target 52 would be 0 (zero) or a fixed distance. In addition, the robot control device 10 may detect position information of the robot 40 with respect to the measurement target 52 by measuring the distance between the robot 40 and the measurement target 52. The robot 40 includes a sensor 48 that can detect position information with respect to the measurement target 52.

The robot control device 10 operates the robot 40 based on the depth information generated by the spatial information acquiring unit 20. The robot control device 10 controls and operates the robot 40 based on an (X_RB, Y_RB, Z_RB) coordinate system. The robot 40 may be installed on a workbench 70, for example. The robot control device 10 may cause the robot 40 to carry out work using the object 50 positioned in the operational space of the robot 40 as a work target. Alternatively, the robot control device 10 may recognize the object 50 positioned within the operational space of the robot 40 as an obstacle. The robot control device 10 may perform calibration before causing the robot 40 to carry out work. The robot control device 10 may correct the coordinates of the measurement target 52 or the coordinate system by causing the robot 40 to contact the measurement target 52 and detecting the load acting on the robot 40 before causing the robot 40 to perform the work.

The (X_RB, Y_RB, Z_RB) coordinate system is also referred to as the coordinate system of the robot 40. The (X_CA, Y_CA, Z_CA) coordinate system is also referred to as the coordinate system of the spatial information acquiring unit 20. The coordinate system of the robot 40 may be set as the same coordinate system as that of the spatial information acquiring unit 20, or may be set as a different coordinate system. When the coordinate system of the robot 40 is set as a different coordinate system from that of the spatial information acquiring unit 20, for example, the robot control device 10 converts depth information generated in the coordinate system of the spatial information acquiring unit 20 to the coordinate system of the robot 40. The coordinate system of the spatial information acquiring unit 20 may be calibrated with the coordinate system of the operational space in advance. Specifically, the coordinate system of the spatial information acquiring unit 20 is expressed as a coordinate system (X_CA, Y_CA, Z_CA) based on camera operations, for example, and the coordinate system (X_CA, Y_CA, Z_CA) based on camera operations may be calibrated to match the coordinate system (X, Y, Z) representing the operational space. The prior calibration of the coordinate system of the spatial information acquiring unit 20 does not need to be performed.

The number of robots 40 and the number of robot control devices 10 are not limited to one as in the illustrated example, and may be two or more. The number of spatial information acquiring units 20 may be one for one operational space as in the illustrated example, or may be two or more. Each of the constituent parts will be described more specifically below.

### <Robot Control Device 10>

The robot control device 10 includes a controller 11, a storage unit 12, and an interface 13. The interface 13 is also referred to as an I/F 13.

The controller 11 may include at least one processor in order to realize the various functions of the robot control device 10. The processor can execute programs for realizing the various functions of the robot control device 10. The processor may be implemented as a single integrated circuit. An integrated circuit is also referred to as an IC. The processor may be implemented as multiple integrated circuits and discrete circuits connected so as to be able to communicate with each other. The processor may include a CPU (Central Processing Unit). The processor may include a DSP (Digital Signal Processor) or a GPU (Graphics Processing Unit). The processor may be implemented based on various other known technologies.

The storage unit 12 may include an electromagnetic storage medium such as a magnetic disk, or may include a memory such as a semiconductor memory or a magnetic memory. The storage unit 12 may be configured as a HDD (Hard Disk Drive) or an SSD (Solid State Drive). The storage unit 12 stores various information and programs executed by the controller 11. The storage unit 12 may function as a working memory of the controller 11. The controller 11 may include at least part of the storage unit 12.

The I/F 13 acquires an image of the operational space of the robot 40 captured by the spatial information acquiring unit 20 and outputs the acquired image to the controller 11. The I/F 13 acquires information on the robot 40 and outputs the information to the controller 11. The information on the robot 40 includes information on the sensor 48. The I/F 13 acquires information for controlling the robot 40 from the controller 11 and outputs the information to the robot 40. The I/F 13 may include a communication device configured to be able to communicate with the spatial information acquiring unit 20 and the robot 40 in a wired or wireless manner. The communication device may be configured to be able to communicate using communication methods based on various communication standards. The communication device may be configured using known communication technologies. Detailed description of the hardware, etc., of the communication device is omitted. The functions of the communication device may be realized by a single communication interface or by a separate communication interface for each connection destination. The controller 11 may be configured to be able to communicate with the spatial information acquiring unit 20 and the robot 40. The controller 11 may include a communication device.

### <Robot 40>

The robot 40 includes the sensor 48 as illustrated in FIG. 1. The robot 40 further includes an arm 42, an end effector 44 attached to the arm 42, and a mark 46 provided on the end effector 44, as illustrated in FIG. 2. Although not essential, the robot 40 further includes an interface 49. The interface 49 is also referred to as an I/F 49. The mark 46 may be provided on the arm 42 instead of the end effector 44.

The arm 42 may be configured as, for example, a six-axis or seven-axis vertical articulated robot. The arm 42 may be configured as a three-axis or four-axis horizontal articulated robot or scalar robot. The arm 42 may be configured as a two-axis or three-axis orthogonal robot. The arm 42 may be configured as a parallel link robot or the like. The number of axes of the arm 42 is not limited to the number illustrated in the example.

The end effector 44 may include, for example, a grasping hand configured to be able to grasp a work target. The grasping hand may include multiple fingers. The number of fingers of the grasping hand may be two or more. The fingers of the grasping hand may each include one or more joints. The end effector 44 may include a suction hand configured to be able to apply suction to a work target. The end effector 44 may include a scooping hand configured to be able to scoop up a work target. The end effector 44 may include a tool, such as a drill, and may be configured to be able to perform various machining operations such as making holes in a work target. The end effector 44 is not limited to these examples and may be configured to be able to perform a variety of other operations. Sensor information may be controlled by the end effector 44 or the robot 40. For example, as illustrated in FIG. 1, the end effector 44 may include a controller 440. The robot 40 may include a controller 410. The controller 440 of the end effector 44 or the controller 410 of the robot 40 may acquire sensor information. The controller 440 of the end effector 44 or the controller 410 of the robot 40 may output state information (for example, position displacement amount or amount of contact) that can be inferred from the sensor information to the robot control device 10. The sensor information may be handled by the robot control device 10, by the controller 410 of the robot 40, or by the controller 440 of the end effector 44.

As illustrated in FIG. 3, the end effector 44 of the robot 40 according to this embodiment is configured as a grasping hand and includes a first finger 441, a second finger 442, and a driving unit 443. In the end effector 44 configured as a grasping hand or a suction hand, the number of fingers or suction nozzles of the end effector 44 is not limited to two, and may be one or three or more. In FIG. 3, the work target to be manipulated by the end effector 44 is represented by the measurement target 52. The end effector 44 is configured to contact the measurement target 52 with a holding unit such as at least one finger or suction nozzle. The end effector 44 may be configured to hold the measurement target 52 with a holding unit such as three or more fingers or suction nozzles.

The robot 40 can control the position of the end effector 44 by operating the arm 42. The end effector 44 may have an axis that serves as a reference for the direction of operation with respect to the work target. If the end effector 44 has an axis, the robot 40 can control the direction of the axis of the end effector 44 by operating the arm 42. The robot 40 controls the start and end of an operation in which the end effector 44 acts on the work target. The robot 40 can move or manipulate the work target by controlling operation of the end effector 44 while controlling the position of the end effector 44 or the direction of the axis of the end effector 44.

The sensor 48 detects the state of each constituent part of the robot 40. The sensor 48 may detect information about the actual position or orientation of each constituent part of the robot 40, or information about the velocity or acceleration of each constituent part of the robot 40. The sensor 48 may detect the load acting on each constituent part of the robot 40. The sensor 48 may detect the current flowing in a motor driving each constituent part of the robot 40 or the torque of each motor. The sensor 48 may detect information obtained as a result of actual operation of the robot 40. The sensor 48 may detect the distance between the robot 40 and another object. By acquiring the detection results of the sensor 48, the robot control device 10 can ascertain the results of actual operations of the robot 40. In other words, the robot control device 10 can acquire the state of the robot 40 based on the detection results of the sensor 48.

The sensor 48 includes a force sensor 444 that detects the direction or magnitude of a load acting on the end effector 44 when the end effector 44 contacts the work target. The force sensor 444 is assumed to be mounted on the end effector 44. The force sensor 444 may include, for example, a strain gauge, but does not need to include a strain gauge.

Although not essential, the sensor 48 further includes a tactile sensor 445. The tactile sensor 445 may be mounted on the first finger 441 or the second finger 442. The tactile sensor 445 may include a pressure sensor, for example, but does not need to include a pressure sensor.

The sensor 48 may further include a distance sensor. The distance sensor may be provided, for example, at the tip of the end effector 44. Specifically, the distance sensor may be mounted on the first finger 441 or the second finger 442.

The robot control device 10 recognizes the position of the mark 46 or the position of the end effector 44 on which the mark 46 is provided based on an image of the mark 46 captured by the spatial information acquiring unit 20. The robot control device 10 also recognizes the state of the robot 40 based on the image of the mark 46 captured by the spatial information acquiring unit 20. The robot control device 10 can calibrate the robot 40 by comparing the state of the robot 40 acquired based on the detection results of the sensor 48 and the state of the robot 40 acquired based on the image of the mark 46.

### <Spatial Information Acquiring Unit 20>

The spatial information acquiring unit 20 acquires spatial information about the operational space of the robot 40. The spatial information acquiring unit 20 may perform image capturing on the operational space and acquire images of the operational space as spatial information. The spatial information acquiring unit 20 may capture an image of a work target such as the object 50 or the measurement target 52 present in the operational space, as illustrated in FIG. 2. The spatial information acquiring unit 20 may be configured as a camera. A 3D stereo camera captures an image of the object 50 present in the operational space, calculates the distance to a measurement point located on a surface of the object 50 present in the operational space as depth, and generates depth information. The spatial information acquiring unit 20 may be configured as a 3D stereo camera. The spatial information acquiring unit 20 may be configured as a LiDAR (light detection and ranging). The LiDAR measures the distance to a measurement point located on a surface of the object 50 present in the operational space and generates depth information. In other words, the spatial information acquiring unit 20 may acquire depth information of the operational space as spatial information. The spatial information acquiring unit 20 is not limited to these devices and may be configured as various devices. The spatial information acquiring unit 20 may acquire various other types of information as spatial information, not limited to images or depth information of the operational space. The spatial information acquiring unit 20 may include an image-capturing element. The spatial information acquiring unit 20 may further include an optical system. The spatial information acquiring unit 20 may output a captured image of the operational space to the robot control device 10. The spatial information acquiring unit 20 may generate depth information in the operational space of the robot 40 and output the depth information to the robot control device 10. The spatial information acquiring unit 20 may generate point group information in the operational space of the robot 40 and output the point group information to the robot control device 10. In other words, spatial information may be output in the form of point group data. In other words, point group information may include spatial information. The point group information is information of a set of measurement points located on the surfaces of the object 50 in the operational space, and includes the coordinates or color information of each measurement point. The point group information can be said to be data that represents the object 50 in the measurement space using multiple points. As a result of the spatial information being in the form of point group data, the data density can be made smaller than that of spatial information based on the initial data acquired by the spatial information acquiring unit 20.

The spatial information acquiring unit 20 has a FOV (Field Of View). The FOV corresponds to the image-capturing range of the spatial information acquiring unit 20. The spatial information acquiring unit 20 can capture an image of a range contained in the FOV The actual field of view size of the spatial information acquiring unit 20 is determined based on the FOV of the spatial information acquiring unit 20 and the depth information. The robot control device 10 can acquire the position and orientation of the mark 46 of the robot 40 based on the actual field of view size of the spatial information acquiring unit 20 and the spatial information including an image of the mark 46 of the robot 40 captured by the spatial information acquiring unit 20. Specifically, the robot control device 10 can calculate the position and orientation of the mark 46 based on the spatial information including the image, etc., by analyzing the spatial information including the image of the mark 46 using a prescribed algorithm. The prescribed algorithm may include, for example, an equation or table, or may include a program that specifies arithmetic processing. The prescribed algorithm may include parameters for correcting the calculation results based on the spatial information including the image.

### (Example Operation of Robot Control Device 10)

The robot control device 10 makes the robot 40 operate so as to act on a work target such as the object 50 or the measurement target 52 that is present in the operational space, or makes the robot 40 operate so as to avoid the object 50, the measurement target 52, or the like. The robot control device 10 makes the robot 40 operate so as to act on the work target such as the object 50 or the measurement target 52 or to avoid the object 50 or the measurement target 52, or the like based on the image of the object 50, the measurement target 52, or the like captured by the spatial information acquiring unit 20.

### <Calibration>

The controller 11 of the robot control device 10 can acquire the state of the robot 40 based on the position and orientation of the mark 46 in the image captured by the spatial information acquiring unit 20, and can acquire the positional relationship between the robot 40 and the object 50 or the measurement target 52, etc. On the other hand, the controller 11 acquires the state of the robot 40 based on the sensor 48 of the robot 40. The state based on the sensor 48 of the robot 40 represents the position and orientation of the robot 40 more accurately than the state based on the image captured by the spatial information acquiring unit 20. Therefore, the controller 11 can control the robot 40 with high accuracy in the operational space by making the state of the robot 40 based on the image captured by the spatial information acquiring unit 20 match the state of the robot 40 based on the sensor 48 of the robot 40. The operation of making the state of the robot 40 based on the spatial information including the image captured by the spatial information acquiring unit 20 match the state of the robot 40 based on the sensor 48 of the robot 40 is also referred to as first calibration. The controller 11 performs the first calibration at least once. Specifically, the controller 11 executes the first calibration so as to make the depth information generated in the (X_CA, Y_CA, Z_CA) coordinate system by the spatial information acquiring unit 20 match the (X_RB, Y_RB, Z_RB) coordinate system of the robot 40. In other words, the controller 11 can transform the coordinate system of the spatial information acquiring unit 20 into the coordinate system of the robot 40 by executing the first calibration. The controller 11 may estimate the relative positional relationship between the coordinate system of the spatial information acquiring unit 20 and the coordinate system of the robot 40 and align the coordinate system of the spatial information acquiring unit 20 with the coordinate system of the robot 40 based on the estimated relative positional relationship.

The controller 11 may perform the first calibration using at least a portion of the FOV of the spatial information acquiring unit 20 as a range. In this embodiment, the controller 11 performs the first calibration in a calibration range 60 illustrated in FIG. 2. The calibration range 60 is illustrated in FIG. 2 as an area surrounded by two dot chain lines. The calibration range 60 corresponds to the range where the first calibration of the robot 40 is performed. The calibration range 60 may include a work area of the robot 40. The calibration range 60 may be a range where the work area of the robot 40 overlaps the FOV

The controller 11 sets a point for performing the first calibration in the calibration range 60 by moving the mark 46 of the robot 40. The point for performing the first calibration is also referred to as a calibration position. The controller 11 moves the mark 46 of the robot 40 to the calibration position and causes the spatial information acquiring unit 20 to capture an image of the mark 46. The controller 11 calculates the position and orientation of the mark 46 based on the spatial information including the image of the mark 46. The controller 11 corrects the position and orientation of the mark 46 based on the spatial information including the image so that the position and orientation of the mark 46 calculated based on the spatial information including the image match the position and orientation of the mark 46 determined based on detection results of the sensor 48 of the robot 40. The correction of the position and orientation of the mark 46 based on the spatial information including the image corresponds to the first calibration. The position and orientation of the mark 46 is also referred to as the mark position orientation. The first calibration corresponds to correction of the mark position orientation. The calibration position corresponds to a position at which the mark position orientation is corrected.

Specifically, the controller 11 may perform the first calibration as described below. The controller 11 generates control information for the robot 40 for moving the mark 46 of the robot 40 to the calibration position. The controller 11 operates the robot 40 based on the control information to move the mark 46 of the robot 40 to the calibration position. The controller 11 acquires spatial information including the image of the mark 46 from the spatial information acquiring unit 20. The controller 11 calculates the position and orientation of the mark 46 based on the spatial information including the image. The position and orientation of the mark 46 calculated based on the spatial information including the image is also referred to as the mark position orientation based on the spatial information including the image. The controller 11 calculates the position and orientation of the mark 46 determined based on the detection results of the sensor 48 of the robot 40. The position and orientation of the mark 46 calculated based on the detection results of the sensor 48 are also referred to as the mark position orientation based on the sensor 48. The controller 11 compares the mark position orientation based on the spatial information including the image with the mark position orientation based on the sensor 48. The controller 11 corrects the mark position orientation based on the spatial information including the image so that the mark position orientation based on the spatial information including the image match the mark position orientation based on the sensor 48. The controller 11 may correct the algorithm for calculating the mark position orientation based on the spatial information including the image. The controller 11 may correct parameters included in the algorithm, or may correct equations, tables, or programs. When multiple calibration positions are set, the controller 11 moves the robot 40 to each calibration position, acquires spatial information including an image of the mark 46 at the calibration position, and corrects the mark position orientation based on the spatial information including the image.

### <<Calibration Items>>

The controller 11 sets the calibration range 60 in advance before performing the first calibration. The controller 11 also sets the calibration position included in the calibration range 60. The controller 11 sets the calibration position within the calibration range 60.

The controller 11 generates control information for the robot 40 to move the robot 40 to the calibration position. As calibration items, the controller 11 generates information specifying the mark position orientation and information specifying the recognition results of the mark 46 of the robot 40 when the robot 40 has been moved to the calibration position. The calibration items are, for example, coordinate information. Specifically, a calibration item is, for example, coordinate information representing the mark position orientation based on the detection results of the sensor 48 of the robot 40 obtained when the robot 40 is moved to the calibration position, or coordinate information representing the mark position orientation based on the recognition results of the mark 46 recognized by the spatial information acquiring unit 20.

The controller 11 may generate a calibration item as described below.

The controller 11 acquires, for example, information about the actual field of view size of the spatial information acquiring unit 20 or information about the FOV from the spatial information acquiring unit 20. The controller 11 sets the calibration range 60 based on the actual field of view size or FOV of the spatial information acquiring unit 20 and the work area of the robot 40. The controller 11 may set the calibration range 60 based on the position of the object 50 or the measurement target 52, etc., in the operational space of the robot 40. The controller 11 may set the calibration range 60 based on the depth information or point group information of the object 50 or measurement target 52, etc., detected by the spatial information acquiring unit 20. In FIG. 2, the shape of the calibration range 60 is set as a quadrilateral pyramidal shape. The shape of the calibration range 60 is not limited to this shape and may be set to various other shapes.

The controller 11 makes the mark position orientation based on the sensor 48 of the robot 40 match the mark position orientation based on the image from the spatial information acquiring unit 20. Specifically, the controller 11 moves the robot 40 to a first position. The controller 11 generates control information for operating the robot 40 so that the mark 46 of the robot 40 comes to be at the prescribed position and orientation, and moves the robot 40 to the first position by controlling the robot 40 based on the control information. The first position may be a prescribed position included in the FOV of the spatial information acquiring unit 20. The first position may be, for example, a center position of the FOV of the spatial information acquiring unit 20. The controller 11 acquires an image of the mark 46 once the robot 40 has moved to the first position, and calculates the position and orientation of the mark 46 as the mark position orientation based on the image. The controller 11 also calculates the mark position orientation based on the sensor 48. Based on a comparison of the mark position orientation based on the image and the mark position orientation based on the sensor 48, the controller 11 corrects the control information for the robot 40 so that the position of the robot 40 becomes the first position, based on the detection results of the sensor 48, in the image. By moving the robot 40 based on the corrected control information, the controller 11 updates the state of the robot 40 so that the position of the robot 40 in the coordinate system of the robot 40 and the position of the robot 40 in the coordinate system of the spatial information acquiring unit 20 match each other. In other words, the controller 11 can be said to update the state of the robot 40 so that the position of the robot 40 becomes the first position in the image.

The controller 11 may generate a position, within the calibration range 60, that is a candidate for a calibration position that is different from the first position. The candidate calibration position is also referred to as a second position. The second position is included in the calibration range 60. The controller 11 estimates what the state of the robot 40 will be if the robot 40 moves to the second position by simulating the motion of the robot 40. In other words, the controller 11 calculates the state of the robot 40 when the robot 40 is assumed to move to the second position. As a result, the controller 11 can determine whether the robot 40 can move to the second position.

If the state of the robot 40 when the robot 40 is assumed to move to the second position is a state in which the robot 40 is not in contact with the object 50 or the measurement target 52, etc., is a state that is within the ranges of motion of the joints, and is a state that is not a singular point, the controller 11 registers the second position as a calibration position. If the controller 11 registers the second position as a calibration position, the controller 11 generates, as multiple calibration items, information specifying the mark position orientation based on the detection results of the sensor 48 of the robot 40 and information specifying the tip position orientation based on the recognition results of the mark 46 of the robot 40 when the robot 40 has moved to the second position. If the controller 11 does not register the second position as a calibration position, the controller 11 may generate a new second position at a different position and determine whether the new second position can be registered as a calibration position. When numerical values representing the angles of the joints of the robot 40 lie within the ranges of motion, the controller 11 may determine that the state of the robot 40 is a state that is not j oint-limited. When the numerical values representing the angles of the joints of the robot 40 lie outside the ranges of motion, the controller 11 may determine that the state of the robot 40 is a joint-limited state.

A singular point corresponds to an orientation where the robot 40 cannot be controlled due to the structure of the robot 40. If the path along which the robot 40 moves includes a singular point, the robot 40 will move at high speed (runaway) in the vicinity of the singular point and stop at the singular point. Singular points of the robot 40 fall into the following three categories (1) through (3).
(1) Points that are outside the work area when the robot 40 is controlled up to the vicinity of the outer limit of the work area. (The work area is the area corresponding to the operational space of the robot 40.)
(2) Points that are inside the work area but are directly above or below the robot base when controlling the robot 40.
(3) Points (wrist alignment singular points) where the joint angle one joint before the joint at the end of the arm 42 of the robot 40 is zero or 180 degrees.

The controller 11 may determine that the state of the robot 40 is a singular point state when a numerical value representing the state of the robot 40 matches a numerical value representing a state that is a singular point. The controller 11 may determine that the state of the robot 40 is a singular point state when the difference between the numerical value representing the state of the robot 40 and the numerical value representing a state that is a singular point is less than a prescribed value. Examples of a numerical value representing the state of the robot 40 may include, for example, the angle of a joint of the arm 42 or the torque of a motor that drives the robot 40.

As described above, the controller 11 sets the calibration range 60 and sets the calibration positions, which are the first position and the second position, within the calibration range 60. The controller 11 can also generate calibration items as information that specifies the mark position orientations of the robot 40 when the robot 40 is moved to the calibration positions.

### <<Performing Calibration>>

The controller 11 performs the first calibration so that the calibration item of the tip position orientation relating to the recognition results of the mark 46 matches the calibration item of the mark position orientation relating to the detection results of the sensor 48 of the robot 40. Specifically, the controller 11 moves the robot 40 to the calibration position. The controller 11 acquires, from the spatial information acquiring unit 20, the recognition results of the mark 46 of the robot 40 for when the robot 40 has moved to the calibration position. The controller 11 calculates the relative positional relationship between the calibration item of the mark position orientation acquired as the recognition result of the mark 46 and the calibration item of the mark position orientation based on the sensor 48 of the robot 40. The relative positional relationship corresponds to the difference in coordinates and the difference in angle between the mark position orientation specified by the two calibration items and the recognition result of the mark 46. The controller 11 corrects the coordinate system of the spatial information acquiring unit 20 so as to align the coordinate system with the coordinate system of the robot 40 in order that the error in coordinates and the error in angle corresponding to the relative positional relationship for the two calibration items are zero or close to zero (i.e., the errors are below prescribed values). In this way, the controller 11 can calculate the relative positional relationship by making the recognition result of the mark 46 when the robot 40 has moved to the calibration position match the mark position orientation identified by the sensor 48 of the robot 40.

The controller 11 can set a calibration position by generating a calibration item. Conversely, the calibration position corresponds to the position to which the robot 40 is moved in order to generate the calibration item. The controller 11 can perform calibration by moving the robot 40 to the calibration position by applying the calibration item to control of the robot 40. Specifically, let us assume that the controller 11 corrects the (X_CA, Y_CA, Z_CA) coordinate system of the spatial information acquiring unit 20 to match the (X_RB, Y_RB, Z_RB) coordinate system of the robot 40 by performing the first calibration. The controller 11 may identify the relationship between the coordinate system of the spatial information acquiring unit 20 and the coordinate system of the robot 40 by performing the first calibration.

The controller 11 may perform a further calibration by using the measurement target 52, which may be a pin disposed in the operational space of the robot 40, to increase the accuracy of the first calibration. The calibration performed using the measurement target 52 to increase the accuracy of the first calibration is also referred to as a second calibration.

Specifically, the controller 11 recognizes the measurement target 52 based on the image from the spatial information acquiring unit 20 and acquires the position of the measurement target 52. The controller 11 may recognize the measurement target 52 by performing image recognition on the image of the measurement target 52. The measurement target 52 may include a measurement target mark for allowing recognition of the position of the measurement target 52 in the image. The mark on the measurement target 52 may be configured identically to the mark 46 on the robot 40, for example, the target mark may be represented by the mark 46 in the present disclosure. The controller 11 may acquire the position of the measurement target 52 based on an image of the measurement target mark of the measurement target 52. In this embodiment, the controller 11 presses the first finger 441 or the second finger 442 of the end effector 44 against the measurement target 52. The controller 11 detects the load acting on the first finger 441 or the second finger 442 from the measurement target 52 by means of the force sensor 444 or the tactile sensor 445. The controller 11 calculates the position of the measurement target 52 based on the detection results of the force sensor 444 or the tactile sensor 445. Based on the calculation result of the position of the measurement target 52, the controller 11 may estimate whether the coordinate system affecting the motion of the robot 40 can be corrected or not, and if correction is possible, the coordinate system may be corrected. As described below, the second calibration may be performed in a state where the robot 40 has been brought into contact with the measurement target 52 by manual operation.

### <<<Correction of Coordinate System>>>

The number of measurement targets 52 disposed in the operational space is not limited to one, and may be two or more. That is, one or more measurement targets 52 may be disposed in the operational space. The controller 11 detects the one or more measurement targets 52 in the operational space image and acquires the coordinates of each measurement target 52 in the coordinate system of the spatial information acquiring unit 20. The controller 11 also acquires the coordinates of each measurement target 52 based on the position information of the end effector 44 with respect to each measurement target 52. Specifically, in this embodiment, based on the detection results of the load acting on the end effector 44 due to the end effector 44 contacting the measurement target 52, the coordinates of each measurement target 52 are acquired in the coordinate system of the robot 40 while taking the position of the end effector 44 with respect to each measurement target 52 to be 0 (zero) or a certain distance while the load is being detected. The controller 11 may perform the second calibration by correcting the coordinate system of the spatial information acquiring unit 20 or the coordinate system of the robot 40 based on the coordinates of each measurement target 52 in the coordinate system of the spatial information acquiring unit 20 and the coordinates of each measurement target 52 in the coordinate system of the robot 40. Specifically, for example, the coordinate system may be corrected so that the depth information generated in the (X_CA, Y_CA, Z_CA) coordinate system by the spatial information acquiring unit 20 matches the (X_RB, Y_RB, Z_RB) coordinate system of the robot 40. The controller 11 may, for example, correct the coordinate system in a rotational direction or a translational direction. The controller 11 may, for example, correct the coordinate system so as to enlarge or shrink the coordinate system. The controller 11 may, for example, correct distortion in the coordinate system.

### <<<Example Configuration of Measurement Target 52>>>

The measurement target 52 may be configured so as to not easily deform when contacted by the end effector 44. For example, the measurement target 52 may be given a high rigidity so that the measurement target 52 is not deformed by contact with the end effector 44. The rigidity of the measurement target 52 may be determined based on the magnitudes and directions of the loads acting on the end effector 44 and the measurement target 52, respectively, when the end effector 44 is brought into contact with the measurement target 52.

The measurement target 52 may be configured to include a portion that is smaller than the spacing between the first finger 441 and the second finger 442 in a state where the first finger 441 and the second finger 442 are opened as wide as possible. In this way, the controller 11 can pinch the measurement target 52 between the first finger 441 and the second finger 442. The measurement target 52 may be configured to be large enough to accommodate the measurement target mark that is to appear in the image from the spatial information acquiring unit 20. The measurement target 52 may be configured to be large enough to allow the position thereof to be recognized in the image from the spatial information acquiring unit 20.

The measurement target 52 may be disposed in a space in which the robot 40 performs work. The measurement target 52 is positioned within the calibration range 60, for example. The measurement target 52 may be configured to so as to allow the position contacted by the end effector 44 to be easily moved. For example, the measurement target 52 may be configured to be adjustable in height in the Z_RB axis direction when disposed on the workbench 70 having a top surface that extends along the X_RB axis and the Y_RB axis. The measurement target 52 may be configured as assemblable blocks so as to be able to be stacked in the Z_RB axis direction.

### <<Flowchart Example>>

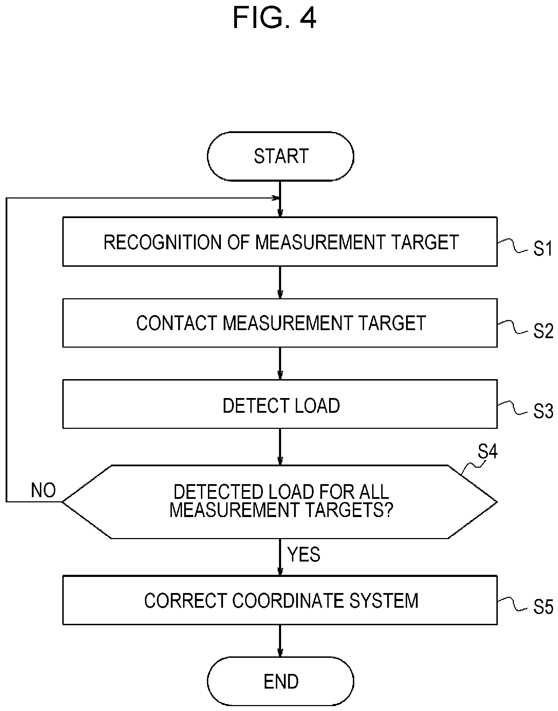

The controller 11 of the robot control device 10 may execute a robot control method including the procedure of a flowchart illustrated in FIG. 4 so as to perform the second calibration in order to improve the accuracy of the first calibration. The robot control method may be realized as a robot control program to be executed by a processor constituting the controller 11. The robot control program may be stored on a non-transitory computer-readable medium.

The controller 11 recognizes the measurement target 52 based on the image from the spatial information acquiring unit 20 (Step S1). The controller 11 brings the end effector 44 of the robot 40 into contact with the measurement target 52 (Step S2). The controller 11 acquires detection results of the force sensor 444 or the tactile sensor 445 when the end effector 44 contacts the measurement target 52, and detects the load (Step S3). As described below, the end effector 44 of the robot 40 may be made to contact the measurement target 52 though a manual operation. Therefore, the controller 11 may acquire not only the detection results of the force sensor 444 or the tactile sensor 445 when the end effector 44 contacts the measurement target 52, but also the detection results of the state when the end effector 44 is made to contact the measurement target 52 through a manual operation. The detection results of the force sensor 444 or the tactile sensor 445 for when the end effector 44 contacts the measurement target 52 and the detection results of the state when the end effector 44 is made to contact the measurement target 52 through a manual operation are collectively referred to as contact information. The controller 11 determines whether or not the end effector 44 has been brought into contact with all the measurement targets 52 and the load has been detected for all the measurement targets 52 (Step S4). If the controller 11 has not detected the load for all the measurement targets 52 (Step S4: NO), the controller 11 returns to the procedure of Step S1 and repeats Steps S1 to S3. In this embodiment, the end effector 44 is brought into contact with the measurement target 52, but the end effector 44 does not need to be brought into contact with the measurement target 52 if position information of the end effector 44 with respect to the measurement target 52 is known using a non-contact distance measurement sensor, for example.

If the controller 11 has detected the load for all the measurement targets 52 (Step S4: YES), the controller 11 corrects the coordinate system of the spatial information acquiring unit 20 based on the detection results of the load (Step S5). After execution of the procedure in Step S5, the controller 11 terminates execution of the procedure of the flowchart in FIG. 4.

Based on the load detected when the end effector 44 contacted the measurement target 52 in the procedure of Step S3, the controller 11 may correct the coordinates recognized as the position information of that measurement target 52 in the coordinate system of the spatial information acquiring unit 20.

The controller 11 may perform the procedure of the flowchart illustrated in FIG. 4 after calibration based on the image from the spatial information acquiring unit 20, or after calibration using another method.

### <Examples of Way In Which End Effector 44 Is Brought Into Contact With Measurement Target 52>>

The controller 11 brings the end effector 44 into contact with the measurement target 52 in various ways, and acquires the position of the measurement target 52 based on the detection results of the force sensor 444 or the tactile sensor 445. Examples of the way in which the end effector 44 is brought into contact with the measurement target 52 are described below. In this case, the position of the measurement target 52 may be, for example, the center coordinates of the measurement target mark (mark 46) or the coordinates of an edge of the measurement target 52.

The controller 11 may bring the end effector 44 into contact with the measurement target 52 so that the measurement target 52 is interposed between the first finger 441 and the second finger 442 of the end effector 44, for example, as illustrated in FIG. 3. In this case, the inner side of the first finger 441 or the second finger 442 contacts the measurement target 52. The controller 11 may calculate the position of the measurement target 52 based on the detection results of the force sensor 444 detecting the load acting on the first finger 441 or the second finger 442 from the measurement target 52 and the position of the first finger 441 or the second finger 442. The controller 11 may calculate the position of the measurement target 52 based on the detection results of the tactile sensor 445 provided on the inner side of the first finger 441 or the second finger 442.

When the first finger 441 and the second finger 442 are aligned along the X_RB axis as illustrated in FIG. 3, the controller 11 can calculate the position of the measurement target 52 along the X_RB axis by bringing the inner side of the first finger 441 or the second finger 442 into contact with the measurement target 52. In other words, the controller 11 can calculate the X_RB axis component of the coordinates of the measurement target 52. The controller 11 can calculate the Y_RB axis component of the coordinates of the measurement target 52 by controlling the first finger 441 and the second finger 442 to be aligned along the Y_RB axis and bringing the inner side of the first finger 441 or the second finger 442 into contact the measurement target 52. The controller 11 can calculate the Z_RB axis component of the coordinates of the measurement target 52 by controlling the first finger 441 and the second finger 442 to be aligned along the Z_RB axis and bringing the inner side of the first finger 441 or the second finger 442 into contact with the measurement target 52. The controller 11 can calculate the 3D coordinates of the measurement target 52 by controlling the first finger 441 and the second finger 442 to be aligned along each of the three axes and then bringing the inner side of the first finger 441 or the second finger 442 into contact with the measurement target 52. The controller 11 can also calculate the 3D coordinates of the measurement target 52 by controlling the first finger 441 and the second finger 442 to be aligned along three directions independent of each other and then bringing the inner side of the first finger 441 or the second finger 442 into contact with the measurement target 52. In this case, for example, each component of the coordinates (X_RB, Y_RB, Z_RB) of the measurement target 52 may be an intermediate value of the respective component of the coordinates (X_RB, Y_RB, Z_RB) of the first finger 441 or the second finger 442.

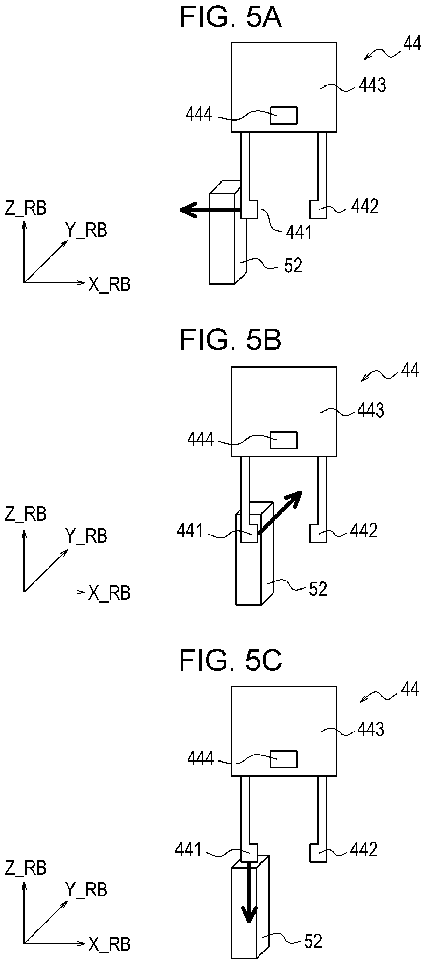

For example, as illustrated in FIG. 5A, FIG. 5B, and FIG. 5C, the controller 11 may bring a surface other than the inner surfaces of the first finger 441 and the second finger 442 into contact with the measurement target 52 with the first finger 441 and the second finger 442 of the end effector 44 in an open state. The first finger 441 and second finger 442 are assumed to be aligned along the X_RB axis direction. The controller 11 can calculate the coordinates of the measurement target 52 by moving the end effector 44 along each of the three axes and bringing the end effector 44 into contact with the measurement target 52. The controller 11 may move the end effector 44 along three mutually independent directions and bring the end effector 44 into contact with the measurement target 52. In this case, for example, the end effector 44 may include a single suction nozzle.

In FIG. 5A, the controller 11 moves the end effector 44 in the negative direction of the X_RB axis and brings the outer side of the first finger 441 (on the negative side of the X_RB axis) into contact with the measurement target 52. In this case, the controller 11 can calculate the position of the measurement target 52 in the X_RB axis direction based on the detection results of the force sensor 444 detecting the load acting on the first finger 441 and the position of the first finger 441. If the tactile sensor 445 is installed on the outer side of the first finger 441, the controller 11 can calculate the position of the measurement target 52 in the X_RB axis direction based on the detection results of the tactile sensor 445 and the position of the first finger 441. In this case, for example, the X_RB component of the coordinates of the measurement target 52 can be obtained as the X_RB component of the coordinates of the outer surface of the first finger 441, plus or minus half the width of the measurement target 52, taking into account the dimensions of the measurement target 52.

In FIG. 5B, the controller 11 moves the end effector 44 in the positive direction of the Y_RB axis and brings the side surface of the first finger 441 (on the negative side of the X_RB axis) into contact with the measurement target 52. In this case, the controller 11 can calculate the position of the measurement target 52 in the Y_RB axis direction based on the detection results of the force sensor 444 detecting the load acting on the first finger 441 and the position of the first finger 441. If the tactile sensor 445 is installed on the side surface of the first finger 441, the controller 11 can calculate the position of the measurement target 52 in the Y_RB axis direction based on the detection results of the tactile sensor 445 and the position of the first finger 441. In this case, for example, the Y_RB component of the coordinates of the measurement target 52 can be obtained as the Y_RB component of the coordinates of the side surface of the first finger 441, plus or minus half the width of the measurement target 52, taking into account the dimensions of the measurement target 52.

In FIG. 5C, the controller 11 moves the end effector 44 in the negative direction of the Z_RB axis and brings the tip of the first finger 441 (on the negative side of the Z_RB axis) in contact with the surface of the measurement target 52 on the positive direction side of the Z_RB axis. In this case, the controller 11 can calculate the position of the measurement target 52 in the Z_RB axis direction based on the detection results of the force sensor 444 detecting the load acting on the first finger 441 and the position of the first finger 441. If the tactile sensor 445 is installed at the tip of first finger 441, the controller 11 can calculate the position of measurement target 52 in the Z_RB axis direction based on the detection results of the tactile sensor 445 and the position of the first finger 441. In this case, for example, the Z_RB component of the coordinates of the measurement target 52 can be the same as the Z_RB component of the coordinates of the tip surface of the first finger 441.

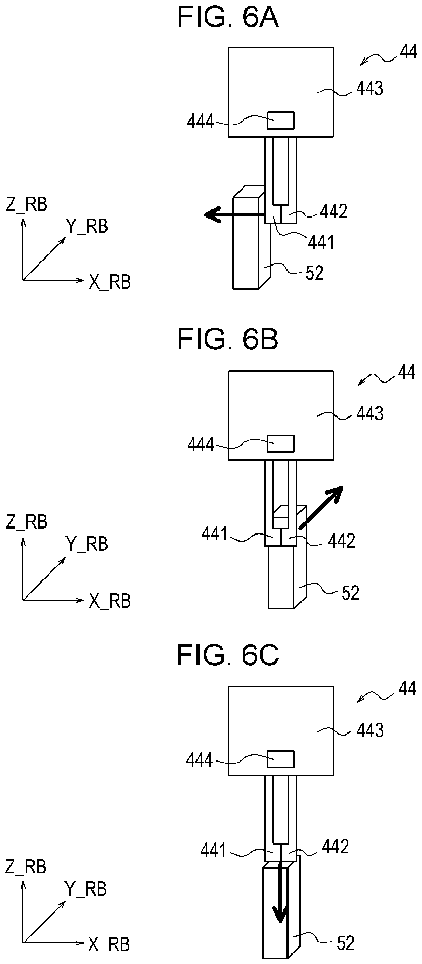

The controller 11 may bring the first finger 441 or the second finger 442 into contact with the measurement target 52 with the first finger 441 and the second finger 442 of the end effector 44 in a closed state, as illustrated in FIG. 6A, FIG. 6B, and FIG. 6C, for example. The controller 11 can calculate the coordinates of the measurement target 52 by moving the end effector 44 along each of the three axes and bringing the end effector 44 into contact with the measurement target 52. The controller 11 may move the end effector 44 along three mutually independent directions and bring the end effector 44 into contact with the measurement target 52. In the examples below, only one side along each of the three axes or directions is contacted, but contact may be made from both sides along each of the three axes or directions.

In FIG. 6A, the controller 11 moves the end effector 44 in the negative direction of the X_RB axis to bring the outer side of the first finger 441 (on the negative side of the X_RB axis) into contact with the measurement target 52. In this case, the controller 11 can calculate the position of the measurement target 52 in the X_RB axis direction based on the detection results of the force sensor 444 detecting the load acting on the first finger 441 and the position of the first finger 441. If the tactile sensor 445 is installed on the outer side of the first finger 441, the controller 11 can calculate the position of the measurement target 52 in the X_RB axis direction based on the detection results of the tactile sensor 445 and the position of the first finger 441. In this case, for example, the X_RB component of the coordinates of the measurement target 52 can be obtained as the X_RB component of the coordinates of the outer surface of the first finger 441, plus or minus half the width of the measurement target 52, taking into account the dimensions of the measurement target 52.

In FIG. 6B, the controller 11 moves the end effector 44 in the positive direction of the Y_RB axis and brings the side surface of the first finger 441 or the second finger 442 (on the negative side of the X_RB axis) into contact with the measurement target 52. In this case, the controller 11 can calculate the position of the measurement target 52 in the Y_RB axis direction based on the detection results of the force sensor 444 detecting the load acting on the first finger 441 or the second finger 442 and the position of the first finger 441 or the second finger 442. If the tactile sensor 445 is installed on the side surface of first finger 441 or the second finger 442, controller 11 can calculate the position of measurement target 52 in the Y_RB axis direction based on the detection results of the tactile sensor 445 and the position of the first finger 441 or the second finger 442. In this case, for example, the Y_RB component of the coordinates of the measurement target 52 can be obtained as the Y_RB component of the coordinates of the side surface of the first finger 441, plus or minus half the width of the measurement target 52, taking into account the dimensions of the measurement target 52.

In FIG. 6C, the controller 11 moves the end effector 44 in the negative direction of the Z_RB axis and brings the tip of the first finger 441 or the second finger 442 (on the negative side of the Z_RB axis) into contact with the measurement target 52. In this case, the controller 11 can calculate the position of the measurement target 52 in the Z_RB axis direction based on the detection results of the force sensor 444 detecting the load acting on the first finger 441 or the second finger 442 and the position of the first finger 441 or the second finger 442. If the tactile sensor 445 is installed at the tip of first finger 441 or the second finger 442, the controller 11 can calculate the position of the measurement target 52 in the Z_RB axis direction based on the detection results of the tactile sensor 445 and the position of first finger 441 or the second finger 442. In this case, for example, the Z_RB component of the coordinates of the measurement target 52 can be the same as the Z_RB component of the coordinates of the tip surface of the first finger 441.

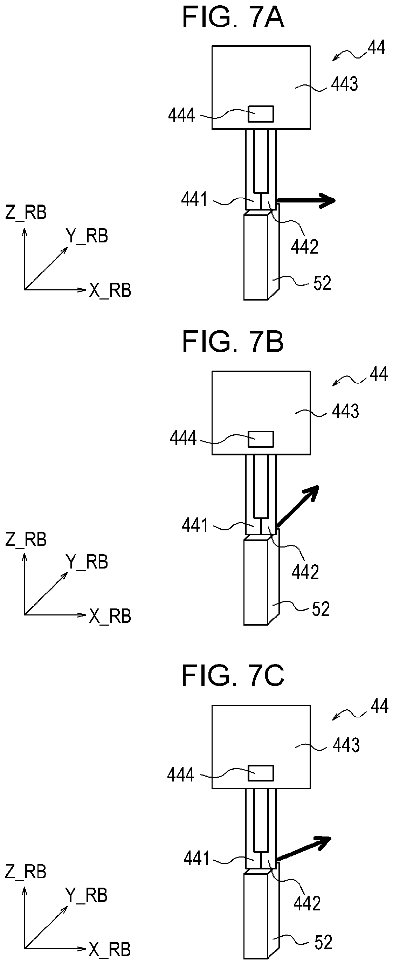

The controller 11 may move the end effector 44 in the X_RB axis direction or the Y_RB axis direction with the first finger 441 or the second finger 442 in contact with the surface of the measurement target 52 on the positive direction side of the Z_RB axis, as illustrated in FIGs. 7A, 7B, and 7C, for example. In other words, the controller 11 may move the end effector 44 along surface directions of the top surface while the end effector 44 is in contact with the top surface of the measurement target 52. In this way, the controller 11 can collectively calculate the Z_RB axis coordinates of the measurement target 52, or the X_RB axis coordinates or Y_RB axis coordinates of the measurement target 52. In this case, the measurement target 52 may be disposed in the operational space so that the surface of the measurement target 52 on the positive direction side of the Z_RB axis (top surface) appears in the operational space image.

Specifically, the controller 11 brings the first finger 441 or the second finger 442 into contact with the surface of the measurement target 52 on the positive direction side of the Z_RB axis as a first step. The controller 11 can calculate the position of the measurement target 52 in the Z_RB axis direction based on the detection results of the force sensor 444 or the tactile sensor 445 and the position of the first finger 441 or the second finger 442.

The controller 11 moves the first finger 441 or the second finger 442 along the X_RB axis or the Y_RB axis as a second step. As a result of moving the first finger 441 or the second finger 442 along the X_RB axis or the Y_RB axis, the first finger 441 or the second finger 442 moves off the surface of the measurement target 52 on the positive direction side of the Z_RB axis. In other words, the first finger 441 or the second finger 442 no longer contacts the surface of the measurement target 52 on the positive direction side of the Z_RB axis. The controller 11 can calculate the position of the measurement target 52 in the X_RB axis direction or the Y_RB axis direction based on detection results in which loss of contact between the first finger 441 or the second finger 442 and the surface of the measurement target 52 on the positive direction side of the Z_RB axis is detected.

The controller 11 can detect changes in the force in the Z_RB axis direction acting on the first finger 441 or the second finger 442 based on detection results of the force sensor 444 or the tactile sensor 445. The controller 11 can calculate the position of the measurement target 52 in the X_RB axis direction or the Y_RB axis direction based on changes in force in the Z_RB axis direction. For example, let us assume that the controller 11 moves the first finger 441 or the second finger 442 in the X_RB axis direction. The controller 11 can determine that the first finger 441 or the second finger 442 has reached the end of the measurement target 52 in the X_RB axis direction when the load acting on the first finger 441 or the second finger 442 in the Z_RB axis direction decreases by a prescribed value or more. The controller 11 may calculate the position at which the first finger 441 or the second finger 442 is determined to have reached the end of the measurement target 52 in the X_RB axis direction as the position of the measurement target 52 in the X_RB axis direction.

In FIG. 7A, the controller 11 moves the end effector 44 in the positive direction of the X_RB axis with the first finger 441 or the second finger 442 in contact with the surface of the measurement target 52 on the positive direction side of the Z_RB axis. In this case, the controller 11 can calculate the position of the measurement target 52 in the Z_RB axis direction based on the detection results of the load acting on the first finger 441 or the second finger 442 and the measurement target 52 detected by the force sensor 444 or the tactile sensor 445 and the position of the first finger 441 or the second finger 442. Furthermore, the controller 11 can calculate the position of the measurement target 52 in the X_RB axis direction based on the detection results of loss of contact between the first finger 441 or the second finger 442 and the measurement target 52 and the position of the first finger 441 or the second finger 442.

In FIG. 7B, the controller 11 moves the end effector 44 in the positive direction of the Y_RB axis with the first finger 441 or the second finger 442 in contact with the surface of the measurement target 52 on the positive direction side of the Z_RB axis. In this case, the controller 11 can calculate the position of the measurement target 52 in the Z_RB axis direction based on the detection results of the load acting on the first finger 441 or the second finger 442 detected by the force sensor 444 or the tactile sensor 445 and the position of the first finger 441 or the second finger 442. Furthermore, the controller 11 can calculate the position of the measurement target 52 in the Y_RB axis direction based on the detection results of loss of contact between the first finger 441 or the second finger 442 and the measurement target 52 and the position of the first finger 441 or the second finger 442.

In FIG. 7C, the controller 11 moves the end effector 44 simultaneously in the positive direction of the X_RB axis and the positive direction of the Y_RB axis with the first finger 441 or the second finger 442 in contact with the surface of the measurement target 52 on the positive direction side of the Z_RB axis. In other words, the controller 11 moves the first finger 441 or the second finger 442 in a diagonal direction with respect to the X_RB axis and the Y_RB axis. In this case, the controller 11 can calculate the position of the measurement target 52 in the Z_RB axis direction based on the detection results of the load acting on the first finger 441 or the second finger 442 detected by the force sensor 444 or the tactile sensor 445 and the position of the first finger 441 or the second finger 442. Furthermore, the controller 11 can calculate the position of the measurement target 52 in the X_RB axis direction and the position of the measurement target 52 in the Y_RB axis direction based on the detection results of loss of contact between the first finger 441 or the second finger 442 and the measurement target 52 and the position of the first finger 441 or the second finger 442.

In the method of moving the end effector 44 in different directions while keeping the end effector 44 in contact with the measurement target 52, the first finger 441 and second finger 442 may be in an open state or in a closed state as illustrated in FIG. 7A, FIG. 7B, and FIG. 7C.

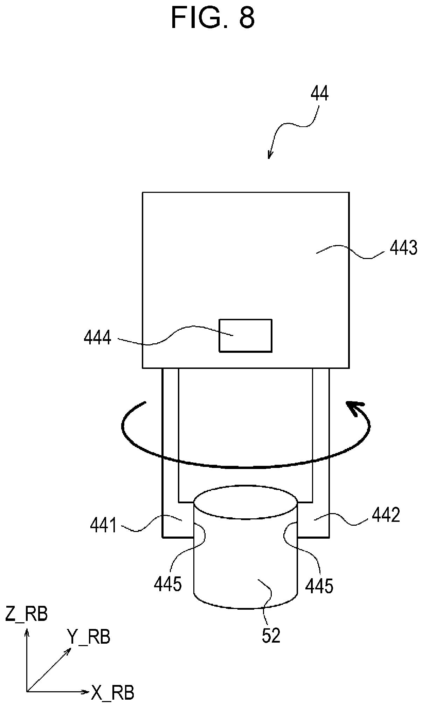

The controller 11 may rotate the end effector 44 so that the first finger 441 and the second finger 442 are moved along the outer periphery of the measurement target 52, with the measurement target 52 interposed between the first finger 441 and the second finger 442, as illustrated in FIG. 8. In this case, the measurement target 52 may be cylindrical in shape with a circular top surface. The controller 11 may control the robot 40 to move at least one finger from among the first finger 441 and the second finger 442 so as to bring one finger closer to the other finger and to rotate the fingers around the measurement target 52 with the first finger 441 and the second finger 442 in contact with the measurement target 52. The controller 11 may rotate the end effector 44 based on detection results from the tactile sensor 445 installed on the inner side of the first finger 441 and second finger 442. The controller 11 can calculate the center coordinates of the measurement target 52 in the X_RB axis direction and the Y_RB axis direction based on the path of movement of the first finger 441 or the second finger 442. The shape of the measurement target 52 is not limited to a cylinder, and may be a quadrangular prism shape with a polygonal top surface. The shape of the measurement target 52 is not limited to these shapes and may be various other shapes. The measurement target 52 may be disposed in the operational space such that the top surface of the measurement target 52 appears in the operational space image.

As discussed above, the controller 11 may control the robot 40 so that the end effector 44 contacts at least one surface of the measurement target 52. By bringing the end effector 44 into contact with at least one surface of the measurement target 52, the controller 11 can improve the detection accuracy of the position of the measurement target 52. In the above example, an example is described in which the coordinates of the measurement target 52 are obtained based on the end effector 44 contacting the measurement target 52. However, if the positional relationship between the end effector 44 and the measurement target 52 is known, the end effector 44 need not contact the measurement target 52. In other words, if a distance sensor capable of non-contact measurement is mounted on the first finger 441 of the end effector 44, the coordinates of the measurement target 52 can be calculated as described above based on the coordinates of the first finger 441 and the distance from the first finger 441 to the measurement target 52. Each component of the coordinates of the measurement target 52 may be calculated based on a different sensor.

The controller 11 may control the robot 40 so that the end effector 44 contacts a surface of the measurement target 52 that appears in the operational space image. In this way, the controller 11 can easily correct the position of the measurement target 52 based on the spatial information acquiring unit 20 by using the position of the measurement target 52 based on contact with the measurement target 52. As a result, the accuracy of the coordinate system of the spatial information acquiring unit 20 can be improved.

In the embodiment of the robot control device 10 and the robot control method described above, the first calibration or the second calibration of the robot 40 configured to grasp the object 50 with the first finger 441 and the second finger 442 was described. The form of the second calibration in this embodiment is not only applicable to the robot 40 including two fingers, and may also be applied to the robot 40 if the robot 40 includes three or more fingers or if the robot 40 includes a holding unit including suction nozzles or fingers, etc. The form of the second calibration in this embodiment may also be applied to the robot 40 if the robot 40 includes a jig such as a measuring rod in addition to a holding unit.

### (Summary)

As described above, in the robot control device 10 and the robot control method according to this embodiment, the coordinates of the measurement target 52 disposed in the operational space are detected by making the robot 40 contact the measurement target 52 and detecting the load. In this way, the coordinates of the measurement target 52 based on the image from the spatial information acquiring unit 20 can be corrected to match the coordinates of the measurement target 52 based on the contact of the robot 40. In addition, the coordinate system of the spatial information acquiring unit 20 can be corrected to match the coordinate system of the robot 40. As a result, the calibration accuracy of the robot 40 can be improved.

As a result of being able to correct the coordinates or coordinate system based on contact of the robot 40 with the measurement target 52, the accuracy of calibration can be ensured even if the accuracy of the calculation of depth information in the spatial information acquiring unit 20 is lowered. As a result, the cost of the spatial information acquiring unit 20 can be reduced. In addition, influences on the accuracy of calibration can be reduced by changing the configuration of the spatial information acquiring part 20 or the arrangement of the spatial information acquiring unit 20.

The accuracy of calibration can be ensured without an operator needing to perform a visual check due to the fact that the coordinates or coordinate system can be corrected by the contact of the robot 40 with the measurement target 52. As a result, workload and work cost can be reduced. In addition, automation of calibration can be promoted. In addition, the coordinates or coordinate system can be corrected even if the work space of the robot 40 is not at a uniform height.

Although an example is described in which the robot 40 is installed on the workbench 70 in the above example, the robot 40 may be installed on a support platform different from the workbench 70. Even if the robot 40 is positioned on a support platform different from the workbench 70, since the work target and the like are installed on the workbench 70, the coordinate system of the operational space is also the coordinate system of the workbench 70. Therefore, by performing the calibration of the present disclosure, accurate work can be performed even if the robot 40 is not installed on the workbench 70.

### (Other Embodiments)

Other embodiments are described below.

### <Case Where Second Calibration Is Performed First>

In the embodiment described above, the controller 11 of the robot control device 10 first performs the first calibration between the coordinate system of the robot 40 and the coordinate system of the spatial information acquiring unit 20, and then performs the second calibration based on the measurement target 52. However, in other embodiments of the present disclosure, the controller 11 of the robot control device 10 may perform the second calibration first.

Specifically, the controller 11 of the robot control device 10 may acquire the coordinates of the measurement target 52 in the coordinate system of the robot 40 in the same or a similar manner to the first Embodiment for the measurement target 52 installed at a specific position. The controller 11 may then perform calibration by correcting the robot coordinates using the acquired coordinates of the measurement target 52 in the coordinate system of the robot 40 as the origin of the coordinate system of the robot 40. Alternatively, the controller 11 may perform the calibration by acquiring the coordinates (X, Y, Z) of the operational space of a specific location, for example, via user input, and correcting the coordinate system of the robot 40 with respect to the coordinate system of the operational space based on input operational space coordinates. The robot 40 may be brought into contact with the measurement target 52 manually, or the robot 40 may be moved into the vicinity of the measurement target 52 manually and then brought into contact with the measurement target 52 by the controller 11 moving the robot in a certain direction.

If the robot control device 10 accepts input from a user, the robot control device 10 may acquire the input from the user via the interface 13. In this case, the robot control system 1 may further include a terminal device including a user interface connected preferentially or wirelessly to the interface 13 of the robot control device 10. The user interface is input with information from the user and outputs information to the user. The user interface includes, for example, a touch sensor. The touch sensor detects contact of the user's finger or a stylus pen, etc., and identifies the contacted position. The touch sensor may be integrated with the display to configure a touch panel display.

If the robot control system 1 does not include a camera as the spatial information acquiring unit 20, the controller 11 may complete the calibration and allow the robot 40 to start working. If the robot control system 1 includes a camera as the spatial information acquiring unit 20, the controller 11 may perform calibration between the coordinate system of the spatial information acquiring unit 20 and the coordinate system of the operational space, or between the coordinate system of the robot 40 and the coordinate system of the spatial information acquiring unit 20, and a conversion formula between the coordinate system of the robot 40 and the coordinate system of the spatial information acquiring unit 20 may be determined. If the positions of the robot 40 and the spatial information acquiring unit 20 are fixed from the beginning, calibration might not be necessary because the coordinate system of the robot 40 and the coordinate system of the spatial information acquiring unit 20 can be converted without calibration of the coordinate system of the robot 40 and the coordinate system of the spatial information acquiring unit 20.

### <Other Example Configurations of Measurement Target 52>

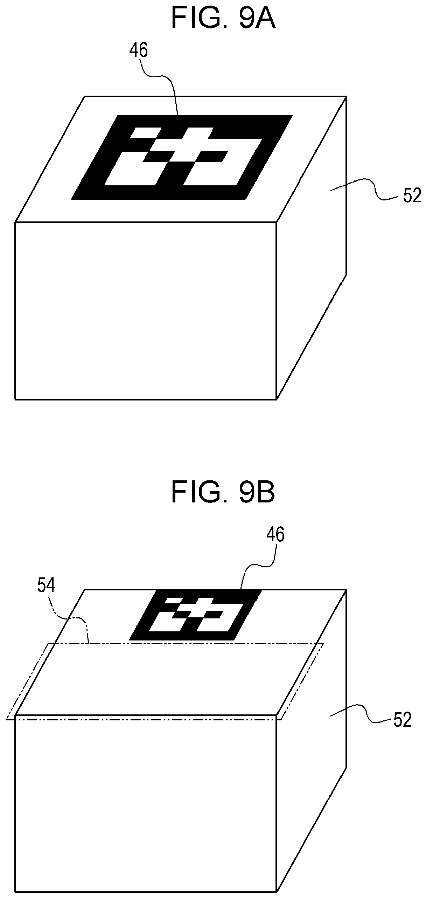

As illustrated in FIG. 9A, the measurement target 52 may include the mark 46. The measurement target 52 may include the mark 46 serving as the measurement target mark. The measurement target 52 may include a measurement target mark and the mark 46 separately.

The measurement target 52 may, for example, have an isotropic planar shape when the top surface of the measurement target 52 is viewed, and the top surface may be flat. The measurement target 52 is a polygonal column, for example, a cube, a rectangular parallelepiped, or a square or triangular column. When a shape having a top surface including corners or straight edges, such as a polygonal column, is adopted for the measurement target 52, for example, the accuracy with which coordinate positions are identified when the end effector 44 is moved along the top surface of the measurement target 52 can be improved due to the presence of corners or edges of the measurement target 52. In this way, the space occupied by the jig for performing the first calibration and the second calibration in the operational space can be reduced.

As illustrated in FIG. 9B, as well as including the mark 46, the measurement target 52 may further include a portion that is to be contacted by the end effector 44 of the robot 40. In this way, the top surface of the measurement target 52 can be used for the second calibration. As a result, the accuracy of the second calibration can be improved.

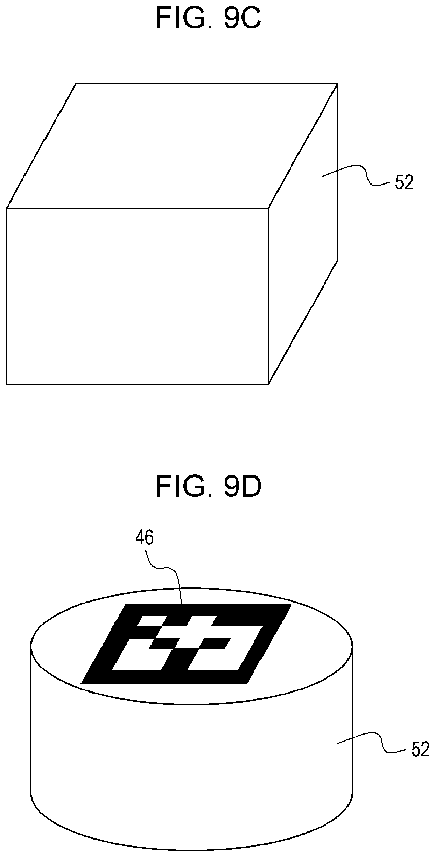

As illustrated in FIG. 9C, the measurement target 52 may be configured to not include the mark 46. If the robot control system 1 does not include a camera as the spatial information acquiring unit 20, the second calibration can be performed by manually moving the robot 40 closer to the measurement target 52 in the configuration illustrated in FIG. 9C.

As illustrated in FIG. 9D, the measurement target 52 may be configured to be cylindrically shaped and have the mark 46 on the top surface of the cylindrical shape. In this way, the accuracy of the second calibration can be improved.

### <Arrangement Example of Measurement Target 52>

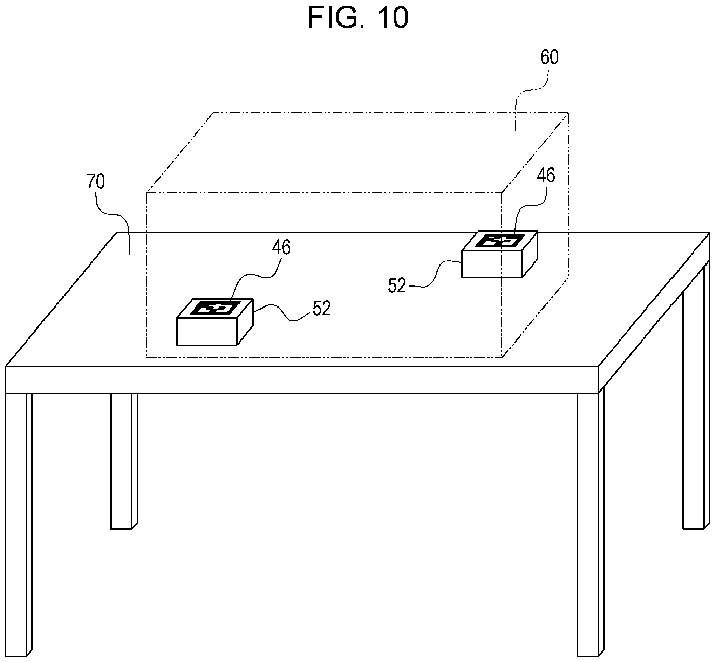

As illustrated in FIG. 10, the measurement targets 52 may be disposed at diagonal positions on the top surface of the workbench 70. In this way, any tilt or distortion of the top surface of the workbench 70 can be corrected in the coordinate system of the operational space of the robot 40.

Although embodiments of the present disclosure have been described based on the drawings and examples, please note that one skilled in the art can make various variations or changes based on the present disclosure. Therefore, please note that these variations or changes are included within the scope of the present disclosure. For example, the functions and so on included in each constituent part can be rearranged in a logically consistent manner, and multiple constituent parts and so on can be combined into one part or divided into multiple parts.

All of the constituent elements described in the present disclosure and/or all of the disclosed methods or all of the steps of disclosed processing can be combined in any combination, except for combinations in which their features would be mutually exclusive. Each of the features described in the present disclosure may be replaced by alternative features that serve the same, equivalent, or similar purposes, unless explicitly stated to the contrary. Therefore, unless explicitly stated to the contrary, each of the disclosed features is only one example of a comprehensive set of identical or equivalent features.

Furthermore, the embodiments according to the present disclosure are not limited to any of the specific configurations of the embodiments described above. The embodiments according to the present disclosure can be extended to all novel features, or combinations thereof, described in the present disclosure, or all novel methods, or processing steps, or combinations thereof, described in the present disclosure.

In the present disclosure, "first", "second," and so on are identifiers used to distinguish between such configurations. Regarding the configurations, "first", "second", and so on used to distinguish between the configurations in the present disclosure may be exchanged with each other. For example, identifiers "first" and "second" may be exchanged between the first calibration and the second calibration. Exchanging of the identifiers take places simultaneously. Even after exchanging the identifiers, the configurations are distinguishable from each other. The identifiers may be deleted. The configurations that have had their identifiers deleted are distinguishable from each other by symbols. Just the use of identifiers such as "first" and "second" in this disclosure is not to be used as a basis for interpreting the order of such configurations or the existence of identifiers with smaller numbers.

### REFERENCE SIGNS

1 robot control system
10 robot control device (11 controller, 12 storage unit, 13 interface)
20 spatial information acquiring unit
40 robot (410 controller, 42 arm, 44 end effector, 440 controller, 441 first finger, 442 second finger, 443 driving unit, 444 force sensor, 445 tactile sensor, 46 mark, 48 sensor, 49 interface)
50 object
52 measurement target (54 contactable range)
60 calibration range
70 workbench

## Claims

1. A robot control device comprising:
a controller configured to control a robot including a sensor and an end effector,
wherein the controller is configured to
acquire position information of the end effector with respect to a measurement target disposed inside an operational space of the robot, and
correct a coordinate system related to operation of the robot based on the position information.

2. The robot control device according to claim 1,
wherein the controller is configured to
acquire coordinates of the measurement target based on spatial information about the operational space,
control the robot and move the end effector to the measurement target based on the coordinates of the measurement target, and
correct a coordinate system related to operation of the robot based on the position information of the end effector with respect to the measurement target.

3. The robot control device according to claim 2,
wherein the measurement target includes a measurement target mark, and
the controller is configured to calculate the coordinates of the measurement target based on spatial information about the measurement target mark.

4. The robot control device according to any one of claims 1 to 3,
wherein the controller is configured to correct the coordinate system related to operation of the robot based on the position information of the end effector with respect to a plurality of the measurement targets.

5. The robot control device according to any one of claims 1 to 4,
wherein the controller is configured to acquire contact information based on contact of the end effector with the measurement target as the position information.

6. The robot control device according to any one of claims 1 to 5,
wherein the controller is configured to correct the coordinate system based on spatial information about the operational space of the robot based on information obtained by moving the end effector with the end effector in contact with the measurement target and detecting loss of contact between the end effector and the measurement target.

7. The robot control device according to claim 6,
wherein the controller is configured to move the end effector in a surface direction along a top surface of the measurement target while the end effector is in contact with the top surface of the measurement target.

8. The robot control device according to any one of claims 1 to 4,
wherein the end effector includes a holding unit, and
the controller is configured to bring the end effector into contact with the measurement target by controlling the robot and moving the holding unit.

9. The robot control device according to claim 8,
wherein when the holding unit includes at least two fingers, the controller is configured to control the robot and move at least one of the fingers closer to another one of the fingers and rotate the holding unit around the measurement target with the at least one of the fingers in contact with the measurement target.

10. The robot control device according to any one of claims 1 to 9,
wherein the controller is configured to control the robot and make the end effector contact at least one surface of the measurement target.

11. The robot control device according to claim 10,
wherein the controller is configured to control the robot and make the end effector contact a surface of the measurement target that appears in an operational space image included in spatial information about the operational space of the robot.

12. The robot control device according to any one of claims 1 to 10,
wherein a shape of the measurement target is a cylindrical shape having a circular top surface or a quadrangular prism shape having a polygonal top surface, and
the measurement target is disposed in the operational space and a top surface of the measurement target appears in an operational space image included in spatial information about the operational space of the robot.

13. A robot control system comprising:
the robot control device according to any one of claims 1 to 12, and the robot.

14. A robot control method for controlling a robot including a sensor and an end effector, the robot control method comprising:
acquiring position information of the end effector with respect to a measurement target disposed inside an operational space of the robot; and
correcting a coordinate system related to operation of the robot based on the position information.
